# FASCICULE DE BREVET EUROPEEN

(11) **EP 1 179 473 B1**
(45) Date de publication et mention de la délivrance du brevet: **09.06.2004**
(21) Numéro de dépôt: 01402147.1
(22) Date de dépôt: 09.08.2001
(51) Int. Cl.: B64D 33/02, B64D 29/00

(54) **Entree d'air pour nacelle de grandes dimensions a transportabilite amelioree**
Lufteinlass mit verbesserter Tragbarkeit für eine Triebwerksgondel mit grossen Abmessungen
Air intake with improved transportability for an aircraft engine nacelle of large dimensions

(30) Priorité: 11.08.2000 FR 0010567
(43) Date de publication de la demande: 13.02.2002
(73) Titulaire: HUREL HISPANO, 76700 Gonfreville l'Orcher (FR)
(72) Inventeur: Gonidec, Patrick, 76290 Montvilliers (FR); Grigis, François P.C., 31100 Toulouse (FR)
(74) Mandataire: Chevalier, Renaud Philippe

(56) Documents cités:
- FR-A- 2 731 049
- FR-A- 2 757 823

## Description

L'invention concerne le domaine des turboréacteurs d'avion.

Elle concerne plus précisément une entrée d'air de soufflante de turboréacteur à double flux, destinée à être fixée à l'avant d'un carter moteur entourant ladite soufflante, et comportant une paroi interne annulaire, un capot externe radialement espacé de la paroi interne, une cloison arrière annulaire reliant les extrémités arrière de la paroi interne et du capot externe, une cloison avant annulaire reliant les extrémités avant de la paroi interne et du capot externe, une bride arrière annulaire située dans le prolongement de la paroi interne et destinée à la fixation de ladite entrée d'air à l'avant du carter moteur et une lèvre avant annulaire qui forme avec la cloison avant un caisson annulaire de dégivrage susceptible d'être raccordé à un système de dégivrage.

Une telle entrée d'air de forme globalement annulaire constitue la partie avant de la nacelle entourant la soufflante d'un turboréacteur à double flux.

Cette entrée d'air doit être transportée de son lieu de fabrication vers le lieu d'assemblage final sur l'avion, soit pour une première monte, soit pour une deuxième monte lorsque, pour des raisons de maintenance, il est nécessaire de remplacer une entrée d'air défectueuse d'une nacelle.

Le transport des entrées d'air de rechange vers des aéroports qui en ont besoin permet de réduire le stock de pièces en volant tout en permettant une immobilisation minimale des avions pour la maintenance.

Pour des raisons de rapidité, il est intéressant de transporter les pièces de rechange, en particulier les entrées d'air par avion.

Lorsque les dimensions le permettent, l'entrée d'air est positionnée en une seule pièce dans un conteneur prévu à cet effet. Ce conteneur ne doit pas dépasser certaines dimensions afin de permettre l'introduction du conteneur dans la soute d'un nombre suffisant d'avions en service.

Lorsque les dimensions de l'entrée d'air sont trop importantes pour permettre son transport en une seule pièce, cette entrée d'air est réalisée actuellement en deux demi-coquilles jointives selon un plan médian. Les deux demi-coquilles peuvent alors être transportées séparément dans des conteneurs plus petits. Les deux demi-coquilles sont ensuite assemblées sur place.

Cette division touche la structure de l'entrée d'air et provoque son affaiblissement, car tous ses constituants sont séparés en deux : la bride arrière, la cloison arrière, le caisson de dégivrage, le capot externe et la paroi interne. Il est donc nécessaire d'établir une liaison très rigide entre les deux demi-coquilles pour reconstituer la rigidité de la structure. Le système de fixation des deux demi-coquilles entraîne donc un surcroît de masse très important.

Il se pose en outre un problème de montage des deux demi-coquilles, lorsque l'entrée d'air se trouve sur le lieu d'assemblage. Il est nécessaire d'utiliser un outillage lourd et encombrant pour mettre en position les deux demi-coquilles. Ce montage est long et le coût supplémentaire dû au personnel qualifié nécessaire au montage final de l'entrée d'air peut s'avérer important.

Enfin, la division de l'entrée d'air en deux demi-coquilles entraîne par le fait même la division du caisson de dégivrage. Il est donc nécessaire d'assurer une étanchéité parfaite du caisson de dégivrage lors de la réunion des deux demi-coquilles sur le lieu d'assemblage.

Le but de l'invention est de proposer une entrée d'air réalisée en deux parties séparables et jointives, ces deux parties pouvant être transportées en conteneur par avion et pouvant être aisément réunies sur le lieu de l'assemblage, qui pallie les inconvénients des deux demi-coquilles mentionnés ci-dessus.

L'invention atteint son but par le fait que le plan de séparation des deux parties passe à l'extérieur du caisson de dégivrage, de la paroi interne et de la bride arrière, et découpe une calotte dans le capot externe et un croissant à bord rectiligne dans la cloison arrière, afin de constituer une partie principale structurale comportant intégralement la bride arrière, la paroi interne et le caisson de dégivrage et comportant la majeure partie du capot externe à l'exception de la calotte, et la majeure partie de la cloison arrière à l'exception du croissant, des moyens étant prévus pour fixer ultérieurement la calotte et le croissant sur ladite partie principale.

Grâce à la disposition du plan de séparation selon l'invention, la partie principale conserve son intégrité structurale, et il ne se pose pas de problème d'étanchéité du caisson de dégivrage lors de l'assemblage de l'entrée d'air. En outre les lignes de découpe ont une longueur nettement diminuée par rapport aux lignes de découpe en deux demi-cylindres selon l'art antérieur. Le surcroît de masse dû aux moyens de liaison des deux parties est nettement diminué d'autant plus que les moyens de liaison ne participent pas à la rigidité de la structure.

En outre la dimension du conteneur de la partie principale est diminuée dans la direction sensiblement perpendiculaire au plan de séparation.

La disposition du plan de séparation sera choisie de telle manière que la largeur de la partie principale dans la direction sensiblement perpendiculaire au plan de séparation soit minimisée. Ce plan de séparation peut être par exemple sensiblement perpendiculaire au bord d'attaque de la lèvre et la partie principale est posée par sa bride arrière sur un support oblique disposé dans le conteneur.

On conçoit qu'avec la solution proposée il soit aisé de monter le croissant et la calotte sur la partie principale soit avant la fixation de l'entrée d'air sur le carter moteur, soit après le montage de la partie principale sur le carter moteur.

La calotte et le croissant peuvent former une pièce secondaire préassemblée ou être maintenus séparés avant le montage sur la pièce principale.

La ligne de découpe de la calotte peut être curviligne et contenue dans un plan géométrique contenant le bord rectiligne du croissant. Mais la calotte peut également être de forme trapézoïdale ou rectangulaire. De préférence certains bords de la calotte seront contenus dans un plan géométrique, afin de faciliter l'usinage des moyens de fixation de la calotte sur des rives montées sur les bords de découpe de la partie de capot externe solidaire de la partie principale.

Afin de faciliter l'accès au système de dégivrage, la calotte forme avantageusement une trappe d'accès à ce système de dégivrage. Le conduit d'amenée de fluide du système de dégivrage traverse alors avantageusement la cloison arrière au niveau du plan de séparation des deux parties.

Selon un premier mode de réalisation, le plan de séparation est disposé dans la zone inférieure de l'entrée d'air. Cette disposition s'applique notamment lorsqu'un seul plan de séparation est suffisant pour diminuer la largeur de la partie principale afin qu'elle puisse entrer sans problème dans les soutes des avions de transport existant. En effet, certains turboréacteurs comportent un renflement dans leur zone inférieure du fait de la présence des auxiliaires sous le carter moteur.

Dans un second mode de réalisation, n'excluant pas le premier, l'entrée d'air étant par exemple plus large que haute vue de l'avant, on peut prévoir deux plans de séparation latéraux diamétralement opposés et parallèles. Dans ce cas également la partie principale conserve l'intégrité du caisson de dégivrage, de la paroi interne et de la bride arrière.

Dans tous les cas on s'arrangera pour que la cloison arrière, diminuée de un ou plusieurs croissants conserve une forme annulaire avec une rigidité suffisante au niveau des lignes de découpe des croissants.

Le ou les croissants peuvent être rigidement fixés sur la partie principale afin de rétablir l'intégrité structurale de la paroi arrière d'origine, si besoin est. Dans ce cas, la ou les calottes peuvent être fixées de manière amovible sur la partie principale pour former des trappes de visite. Elles peuvent également être montées sur la partie principale au moyen de charnières. Ces charnières peuvent être articulées au niveau du bord rectiligne du croissant, du bord avant de ladite calotte ou d'un bord latéral de calotte si cette calotte possède des bords sensiblement rectilignes. La calotte, retirée par découpe du capot externe, peut également être partagée en sous éléments formant des portes d'accès à l'intérieur de l'entrée d'air.

Il est à noter que la calotte et le croissant ont des dimensions et des poids relativement faibles par rapport à ceux de la partie principale. Ils sont donc manipulables par le personnel de montage ou d'entretien sans outillage spécial.

D'autres avantages et caractéristiques de l'invention ressortiront à la lecture de la description suivante faite à titre d'exemple et en référence aux dessins annexés dans lesquels :
la figure 1 est une coupe selon un plan vertical médian d'une entrée d'air selon l'invention ;
la figure 2 est une vue de l'arrière en perspective de l'entrée d'air de la figure 1 qui montre le plan de séparation de l'entrée d'air en deux parties ;
la figure 3 est une vue à plus grande échelle de la zone inférieure de l'entrée d'air de la figure 2 ;
la figure 4 montre plusieurs variantes possibles de découpe de la calotte ;
la figure 5 est une vue latérale de la partie principale structurale ;
la figure 6 montre la disposition de la partie principale dans un conteneur conformé au gabarit de la porte d'accès de la soute d'un avion, cette partie principale étant représentée en coupe ;
la figure 7 est une vue de face d'une cloison arrière après découpe d'un croissant dans la zone inférieure ;
la figure 8 est une vue de face d'une cloison arrière après découpe selon deux plans de séparation ;
la figure 9 montre une fixation rigide du croissant sur la cloison arrière ;
la figure 10 est une vue extérieure d'une calotte fixée sur le capot arrière de manière amovible ;
la figure 11 est une coupe selon la ligne XI-XI de la figure 10 ;
la figure 12 montre un croissant monté de manière articulée sur la cloison arrière, la calotte étant en position fermée ;
la figure 13 montre le basculement de la calotte et du croissant de la figure 12 vers la position d'ouverture de la trappe ;
la figure 14 montre une fixation rigide du croissant sur la cloison arrière et une articulation de la calotte sur la cloison arrière ;
la figure 15 est identique à la figure 14 avec la calotte en position d'ouverture ;
les figures 16 et 17 montrent une calotte de forme trapézoïdale articulée par l'avant sur la partie principale ; et
les figures 18 et 19 montrent une calotte en deux parties articulées latéralement sur le capot extérieur.

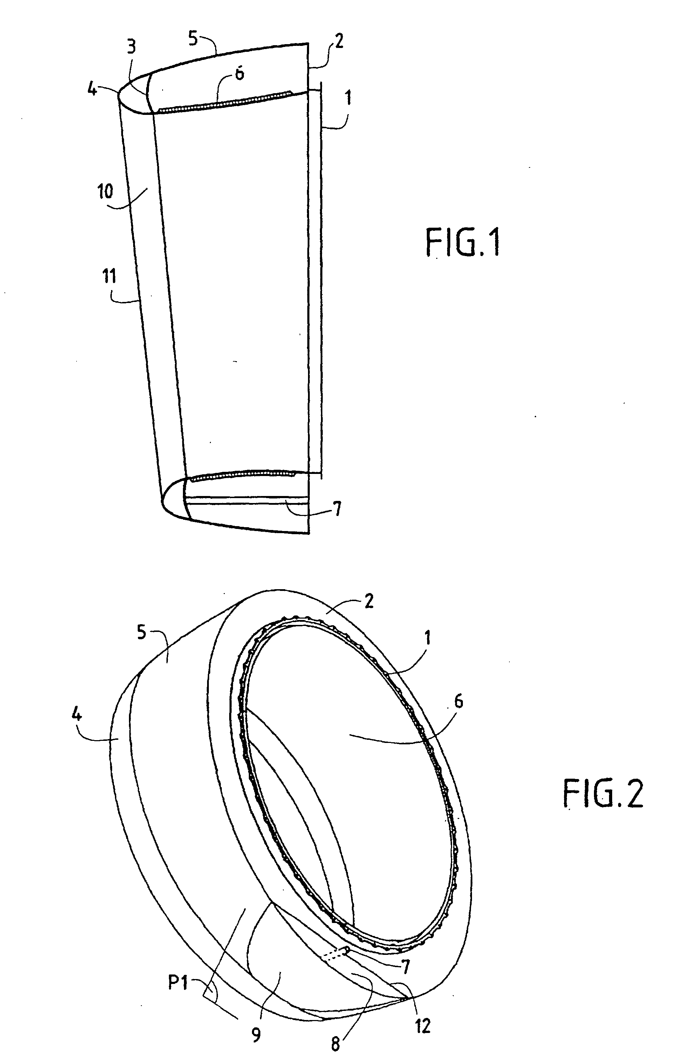

Les figures 1 à 3 montrent une entrée d'air de soufflante de turboréacteur à double flux destinée à être fixée sur un carter annulaire moteur entourant la soufflante par l'intermédiaire d'une bride arrière annulaire 1.

Cette bride arrière 1 est située dans le prolongement arrière d'une paroi interne 6 acoustique en nid d'abeille sensiblement de révolution autour de l'axe de rotation de la soufflante. L'entrée d'air comporte en outre un capot externe 5 radialement espacé de la paroi interne 6, qui est relié par son extrémité arrière à la paroi interne 6 par une cloison arrière 2 radiale et annulaire, et qui est relié par son extrémité avant à l'extrémité aval de la paroi interne 6 par une cloison avant 3. Une lèvre avant 4 annulaire à profil aérodynamique relie les bords de la cloison avant 3, et définit avec cette dernière un caisson de dégivrage avant 10 de forme annulaire à l'avant de l'entrée d'air. La référence 11 désigne le bord d'attaque de la lèvre avant, ce bord d'attaque étant habituellement légèrement incliné vers l'avant par rapport à l'axe de rotation du turboréacteur pour des raisons aérodynamiques au décollage de l'avion.

Cette entrée d'air est destinée à être montée à l'avant du carter moteur et constitue l'élément avant de la nacelle. Elle est montée soit en première monte sur le lieu d'assemblage du moteur, soit en deuxième monte, en cas de remplacement d'une entrée d'air abîmée par suite de chocs avec des corps étrangers par exemple.

La référence 7 désigne un conduit d'amenée d'air chaud et sous pression au caisson de dégivrage 10. Il est important de pouvoir accéder facilement au conduit 7 afin de l'inspecter ou de le remplacer. En effet, ce conduit 7 conduit de l'air à environ 12 bars et 450°C et il est par conséquent très sollicité.

Cette entrée d'air, qui peut être de grande dimension et avoir un diamètre supérieur à 3 m, doit pouvoir être transportée en conteneur par avion vers le lieu d'assemblage sur la nacelle.

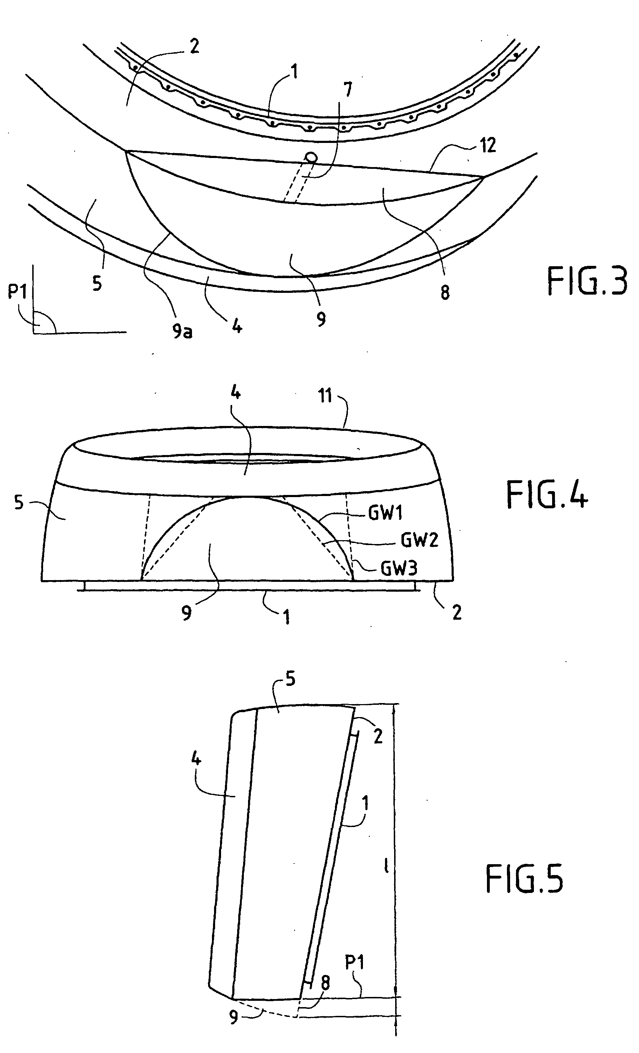

A cet effet, l'entrée d'air décrite ci-dessus est réalisée en deux parties séparables et jointives selon un plan de séparation P1 (voir figures 2 et 3) qui maintient l'intégrité structurale d'une pièce principale comportant en totalité le caisson de dégivrage 10, la paroi interne 6 et la bride arrière 1. Ce plan de séparation découpe une calotte 9 dans le capot externe 5 et un croissant 8, ayant un bord rectiligne 12 rejoignant le contour 9a de la calotte 9.

Les éléments, calotte 9 et croissant 8, détachés de l'entrée d'air sont de faibles dimensions par rapport aux dimensions de la partie principale structurale.

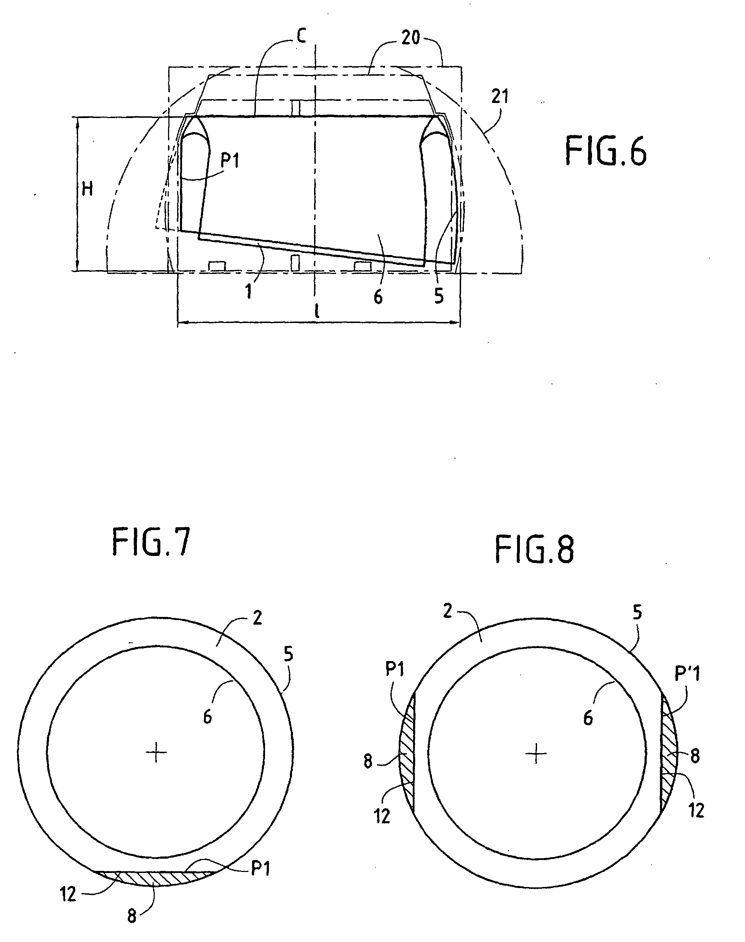

Ainsi que cela est montré sur la figure 5, le plan de séparation P1 est disposé de manière à minimiser autant que faire se peut la largeur 1 de la partie principale dans la direction perpendiculaire au plan P1.

Le plan P1 est avantageusement sensiblement perpendiculaire au bord d'attaque 11 de la lèvre avant 4, afin de minimiser l'encombrement de la partie principale dans le sens de la largeur 1 et de la hauteur H.

La partie principale est posée par la bride arrière 1 sur un support oblique prévu dans le fond d'un conteneur C de transport et le bord d'attaque 11 est dans un plan horizontal, ainsi que cela se voit clairement sur la figure 6. La référence 20 de cette figure 6 montre le gabarit de la porte d'accès à la soute de plusieurs avions et la référence 21 définit le gabarit interne de la soute d'un avion. On constate sur cette figure 6 que le fait d'enlever une calotte 9 et un croissant 8, de faibles dimensions, permet d'introduire le conteneur, contenant la partie principale, dans l'avion.

Le plan de séparation P1 n'est pas nécessairement un plan géométrique, ainsi que cela est montré sur la figure 4.

Lorsque P1 est un plan géométrique, le contour GW1 de la calotte 9 est curviligne. Le plan P1 est dans ce cas tangent au caisson de dégivrage 10, ainsi que cela est montré sur les figures 2 et 3.

Le contour de la calotte 9 peut avoir une configuration trapézoïdale ainsi que cela est représenté par la référence GW2 sur la figure 4, ou une configuration sensiblement rectangulaire ainsi que cela est représenté par la référence GW3. Dans ce cas la calotte 9 est obtenue de préférence par une découpe du capot extérieur 5 selon des plans sécants perpendiculaires à la figure 4 pour la référence GW2, ou selon des plans sécants sur l'axe de la soufflante pour la référence GW3.

Ainsi que cela est montré sur les figures 2 à 5 et 7, le plan de séparation P1 est disposé par exemple dans la région inférieure de l'entrée d'air. Mais on s'arrange pour que le bord 12 du croissant 8 soit suffisamment éloigné du bord interne de la cloison arrière 2 afin d'assurer l'intégrité structurale de la partie de cloison arrière 2 de la partie principale.

La figure 8 montre un exemple de découpe d'une entrée d'air par deux plans de séparation P1 et P'1 latéraux et diamétralement opposés. Ici aussi on s'arrange pour que les bords 12 des deux croissants 8 soient suffisamment éloignés du bord interne de la cloison arrière 2 pour des raisons structurales.

Ainsi que cela se voit sur les figures 2 et 3, le conduit d'amenée 7 traverse avantageusement la cloisons arrière 2 au niveau du bord rectiligne 12 du croissant 8.

Le croissant 8 et la calotte 9 peuvent être fixées sur la partie principale afin de former une entrée d'air complète avant le montage de cette entrée d'air sur le carter moteur. Mais la partie principale peut d'abord être montée sur le carter moteur, puis le croissant 8 et la calotte 9. Le croissant 8 et la calotte 9 seront dans tous les cas avantageusement utilisés comme trappe de visite donnant accès aux organes situés à l'intérieur de l'entrée d'air, par exemple au conduit 7.

La calotte 9 et le croissant 8 peuvent être fixés sur des rives 15 prévues dans le bord des découpes du capot externe 5 et de la cloison arrière 2 de la partie principale par boulonnage par exemple.

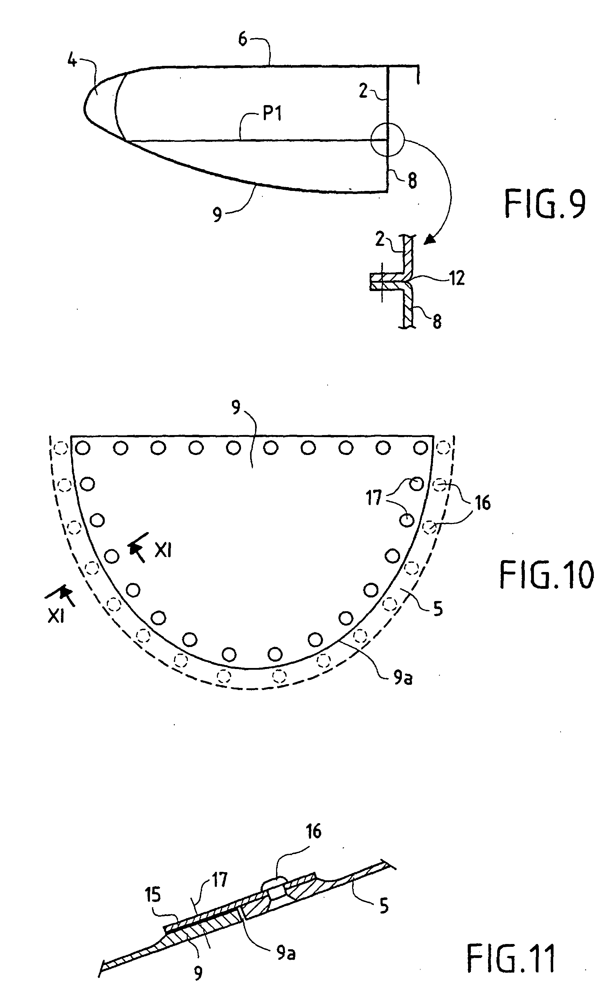

Les figures 9 à 19 montrent différentes solutions pour la fixation du croissant 8 et de la calotte 9.

Sur les figures 9 à 11, on voit que le croissant 8 peut être fixé sur la cloison arrière 2 par boulonnage de brides prévues au niveau du bord rectiligne 12. Des rives 15 sont fixées par rivetage sur la face interne du capot externe 5 le long du contour 9a. La calotte 9 est fixée par boulonnage sur les rives 15.

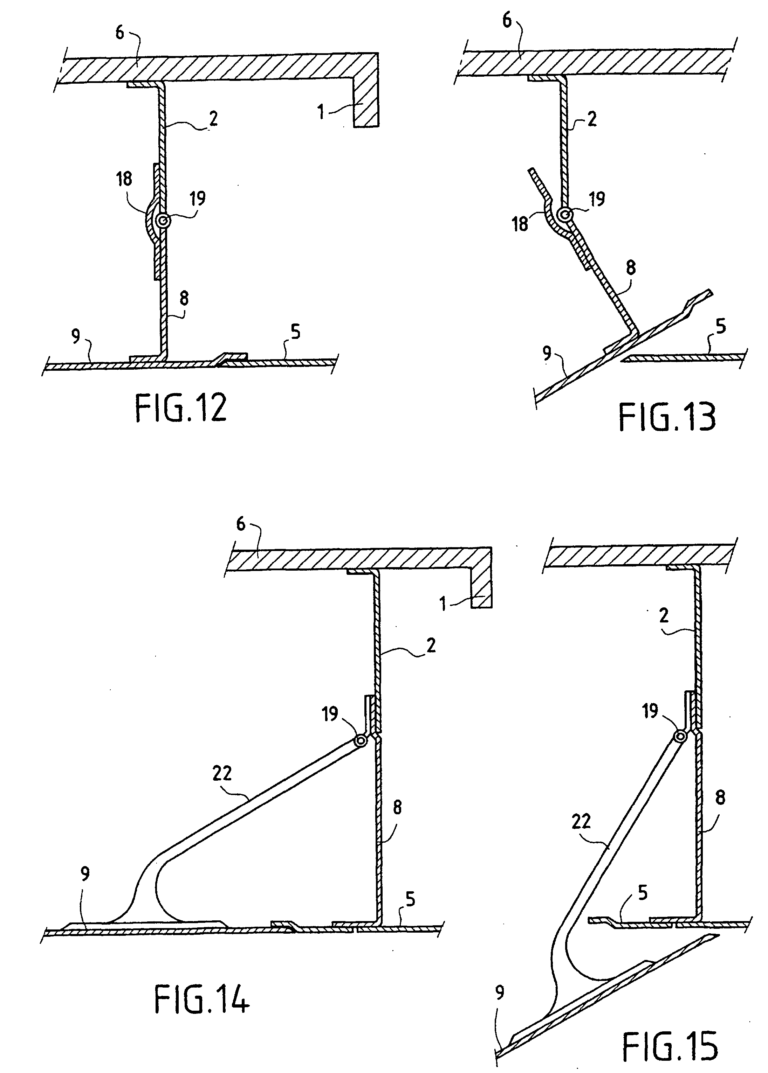

Les figures 12 et 13 prévoient une articulation 19 au niveau du bord rectiligne 12 du croissant 8. Cette région est en outre protégée par un coupe feu 18. La calotte 9, solidaire du croissant 8, peut pivoter autour de l'articulation 19. Des moyens sont prévus pour immobiliser la calotte 9 sur le capot externe 5, il peut s'agir de boulons ou de verrous par exemple.

Les figures 14 et 15 montrent une calotte 9 montée pivotante sur la cloison arrière 2 au moyen d'une articulation 19 prévue près du bord rectiligne 12 du croissant 8, mais ce dernier est fixé sur la cloison arrière 2. L'articulation 19 supporte plusieurs ferrures 22 attachées à la calotte 9. Afin d'éviter toute gène avec le capot moteur, la liaison aval entre la calotte 9 et le capot externe 5 est positionnée en avant de l'axe d'articulation 19.

Le verrouillage de la calotte 9 sur le capot externe 5 peut être effectué par une série de boulons ou à l'aide de verrous disposés de telle sorte que la fermeture soit la mieux assurée possible.

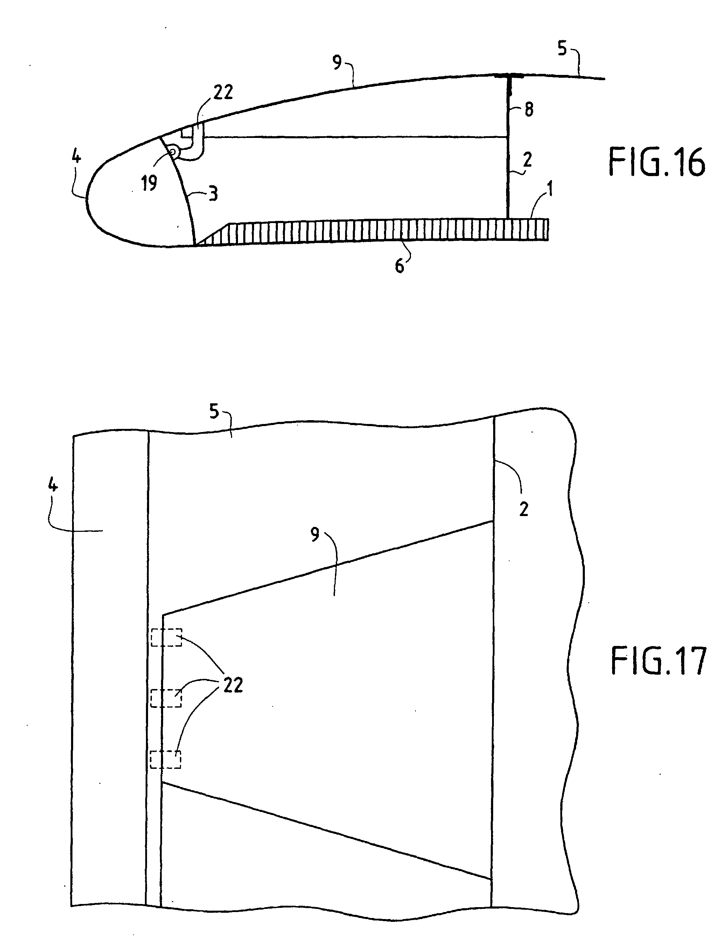

Les figures 16 et 17 montrent un croissant 8 rigidement fixé sur la cloison arrière 2 et une calotte 9 reliée par des ferrures 22 à une articulation 19 disposée en aval sur la cloison avant 3. La calotte 9 tend à se refermer par la pression de l'air exercée sur la nacelle.

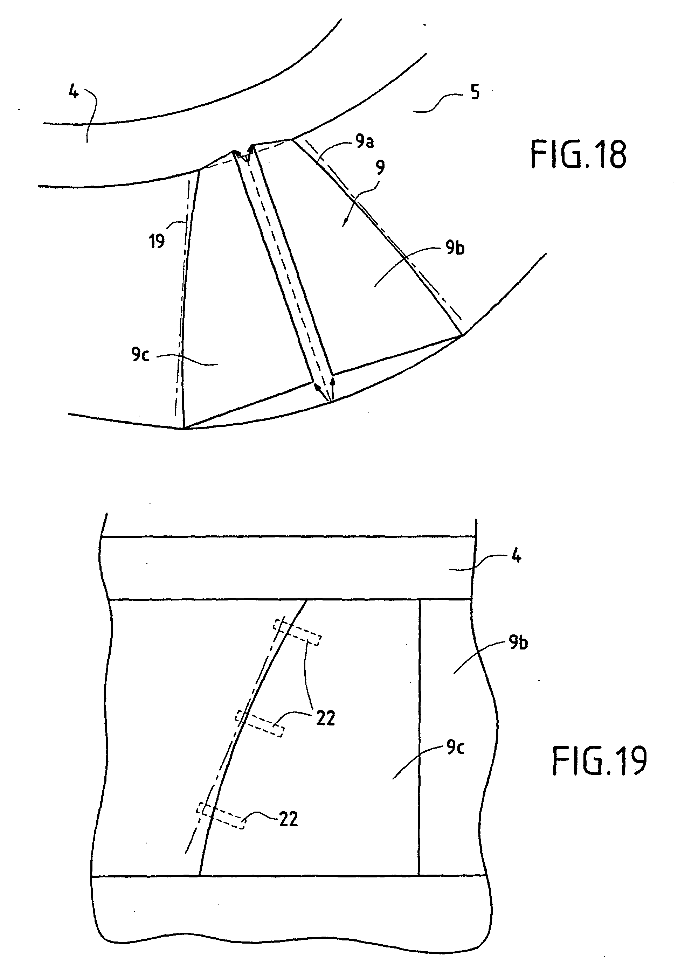

Les figures 18 et 19 montrent une calotte 9 de forme trapézoïdale partagée en deux pièces selon une ligne médiane afin de constituer deux vantaux 9b, 9c articulés latéralement au moyen de ferrures 22 sur un axe d'articulation 19. Ces vantaux sont maintenus en position fermée par des verrous par exemple ou par tout autre moyen approprié.

## Revendications

1. Entrée d'air de soufflante de turboréacteur à double flux, susceptible d'être fixée à l'avant d'un carter moteur entourant ladite soufflante, et comportant une paroi interne (6) annulaire, un capot externe (5) annulaire radialement espacé de la paroi interne (6), une cloison arrière (2) annulaire reliant les extrémités arrière de la paroi interne (6) et du capot externe (5), une cloison avant (3) annulaire reliant les extrémités avant de la paroi interne (6) et du capot externe (5), une bride arrière (1) annulaire située dans le prolongement de la paroi interne (6) et destinée à la fixation de ladite entrée d'air à l'avant du carter moteur et une lèvre avant (4) annulaire qui forme avec la cloison avant (3) un caisson (3, 4) annulaire de dégivrage susceptible d'être raccordé à un système de dégivrage, ladite entrée d'air étant réalisée en au moins deux parties séparables,
**caractérisée par le fait que** le plan de séparation (P1) des deux parties passe à l'extérieur du caisson de dégivrage (10), de la paroi interne (6) et de la bride arrière (1), et découpe une calotte (9) dans le capot externe (5) et un croissant (8) à bord rectiligne (12) dans la cloison arrière (2), afin de constituer une partie principale structurale comportant intégralement la bride arrière (1), la paroi interne (6) et le caisson de dégivrage (10) et comportant la majeure partie du capot externe (5) à l'exception de la calotte (9), et la majeure partie de la cloison arrière (2) à l'exception du croissant (8), des moyens étant prévus pour fixer ultérieurement la calotte (9) et le croissant (8) sur ladite partie principale.

2. Entrée d'air selon la revendication 1, **caractérisée par le fait que** le plan de séparation (P1) est choisi de manière à minimiser la largeur 1 de la partie principale dans la direction sensiblement perpendiculaire au plan de séparation (P1).

3. Entrée d'air selon la revendication 2, **caractérisée par le fait que** le plan de séparation (P1) est sensiblement perpendiculaire au bord d'attaque (11) de la lèvre avant (4).

4. Entrée d'air selon l'une des revendications 1 à 3, **caractérisée par le fait que** la ligne de découpe (9a) de la calotte (9) est curviligne et contenue dans un plan géométrique contenant le bord rectiligne (12) du croissant (8).

5. Entrée d'air selon l'une quelconque des revendications 1 à 3, **caractérisée par le fait que** la calotte (9) a un contour rectangulaire ou trapézoïdal.

6. Entrée d'air selon l'une quelconque des revendications 1 à 5, **caractérisée par le fait que** la calotte (9) forme une trappe d'accès à l'intérieur.

7. Entrée d'air selon la revendication 6, **caractérisée par le fait que** le système de dégivrage comporte un conduit (7) d'amenée de fluide traversant la cloison arrière (2) au niveau du plan de séparation (P1).

8. Entrée d'air selon l'une quelconque des revendications 1 à 7, **caractérisée par le fait que** le plan de séparation (P1) est disposé dans la zone inférieure de ladite entrée d'air.

9. Entrée d'air selon l'une quelconque des revendications 1 à 7, **caractérisée par le fait qu'**elle comporte deux plans de séparation latéraux (P1, P'1) diamétralement opposés.

10. Entrée d'air selon l'une quelconque des revendications 1 à 9, **caractérisée par le fait que** le croissant (8) est rigidement fixé sur la partie principale au moyen de brides.

11. Entrée d'air selon l'une quelconque des revendications 1 à 10, **caractérisée par le fait que** la calotte (9) est montée sur la partie principale au moyen de charnières (19).

## Patentansprüche

1. Lufteinlass für das Gebläse eines zweiflutigen Turbostrahltriebwerks, der geeignet ist, vorne an einem Motorgehäuse befestigt zu werden, welches das Gebläse umgibt und eine ringförmige Innenwand (6), eine von der Innenwand (6) radial beabstandete ringförmige Außenhaube (5), eine ringförmige hintere Zwischenwand (2), welche die hinteren Enden der Innenwand (6) und der Außenhaube (5) verbindet, eine ringförmige vordere Zwischenwand (3), welche die vorderen Enden der Innenwand (6) und der Außenhaube (5) verbindet, einen ringförmigen hinteren Flansch (1), der in der Verlängerung der Innenwand (6) angeordnet und zum Befestigen des Lufteinlasses vorne am Motorgehäuse bestimmt ist, und eine ringförmige Vorderlippe (4) umfasst, welche mit der vorderen Zwischenwand (3) einen ringförmigen Enteisungskasten (3, 4) bildet, der geeignet ist, mit einem Enteisungssystem verbunden zu werden, wobei der Lufteinlass in mindestens zwei trennbaren Abschnitten ausgeführt wird,
**dadurch gekennzeichnet, dass** die Trennungsebene (P1) der zwei Abschnitte außerhalb des Enteisungskastens (10), der Innenwand (6) und des hinteren Flansches (1) verläuft und einen Deckel (9) in die Außenhaube (5) und einen Halbmond (8) mit gerader Kante (12) in die hintere Zwischenwand (2) schneidet, um einen strukturellen Hauptabschnitt zu bilden, welcher insgesamt den hinteren Flansch (1), die Innenwand (6) und den Enteisungskasten (10) sowie den Großteil der Außenhaube (5), mit Ausnahme des Deckels (9), und den Großteil der hinteren Zwischenwand (2), mit Ausnahme des Halbmondes (8), umfasst, wobei Mittel vorgesehen sind, um den Deckel (9) und den Halbmond (8) zu einem späteren Zeitpunkt auf dem Hauptabschnitt zu befestigen.

2. Lufteinlass nach Anspruch 1, **dadurch gekennzeichnet, dass** die Trennungsebene (P1) so gewählt wird, dass die Breite 1 des Hauptabschnitts in der Richtung minimiert wird, die im Wesentlichen senkrecht zur Trennungsebene (P1) verläuft.

3. Lufteinlass nach Anspruch 2, **dadurch gekennzeichnet, dass** die Trennungsebene (P1) im Wesentlichen senkrecht zur Vorderkante (11) der Vorderlippe (4) verläuft.

4. Lufteinlass nach einem der Ansprüche 1 bis 3, **dadurch gekennzeichnet, dass** die Schnittlinie (9a) des Deckels (9) gekrümmt und in einer geometrischen Ebene enthalten ist, welche die gerade Kante (12) des Halbmondes (8) enthält.

5. Lufteinlass nach einem der Ansprüche 1 bis 3, **dadurch gekennzeichnet, dass** der Deckel (9) eine rechteckige oder trapezförmige Kontur aufweist.

6. Lufteinlass nach einem der Ansprüche 1 bis 5, **dadurch gekennzeichnet, dass** der Deckel (9) eine Zugangsluke zum Inneren bildet.

7. Lufteinlass nach Anspruch 6, **dadurch gekennzeichnet, dass** das Enteisungssystem eine Fluidzufuhrleitung (7) umfasst, welche die hintere Zwischenwand (2) auf der Höhe der Trennungsebene (P1) durchquert.

8. Lufteinlass nach einem der Ansprüche 1 bis 7, **dadurch gekennzeichnet, dass** die Trennungsebene (P1) im unteren Bereich des Lufteinlasses angeordnet ist.

9. Lufteinlass nach einem der Ansprüche 1 bis 7, **dadurch gekennzeichnet, dass** er zwei einander diametral entgegengesetzte seitliche Trennungsebenen (P1, P'1) umfasst.

10. Lufteinlass nach einem der Ansprüche 1 bis 9, **dadurch gekennzeichnet, dass** der Halbmond (8) mit Hilfe von Flanschen starr auf dem Hauptabschnitt befestigt ist.

11. Lufteinlass nach einem der Ansprüche 1 bis 10, **dadurch gekennzeichnet, dass** der Deckel (9) mit Hilfe von Scharnieren (19) auf dem Hauptabschnitt befestigt ist.

## Claims

1. Air intake to the fan of a turbofan engine, which intake can be fixed to the front of an engine casing enclosing said fan, and comprises an annular internal wall (6), an annular external cowl (5) spaced radially away from the internal wall (6), an annular rear partition (2) connecting the rear ends of the internal wall (6) and of the external cowl (5), an annular front partition (3) connecting the front ends of the internal wall (6) and of the external cowl (5), an annular rear flange (1) situated in the continuation of the internal wall (6) and intended for securing said air intake to the front of the engine casing and an annular front lip (4) which, with the front partition (3) forms an annular de-icing chamber (3, 4) which can be connected to a de-icing system, said air intake being made in at least two separable parts,
**characterized in that** the plane (P1) of separation of the two parts passes on the outside of the de-icing chamber (10), of the internal wall (6) and of the rear flange (1) and cuts a cap (9) from the external cowl (5) and a crescent (8) with a straight edge (12) from the rear partition (2) so as to form a structural main part which wholly comprises the rear flange (1), the internal wall (6) and the de-icing chamber (10) and comprises most of the external cowl (5) except for the cap (9), and most of the rear partition (2) except for the crescent (8), means being provided for fixing the cap (9) and the crescent (8) to said main part later.

2. Air intake according to Claim 1, **characterized in that** the plane of separation (P1) is chosen so as to minimize the width 1 of the main part in the direction roughly perpendicular to the plane of separation (P1).

3. Air intake according to Claim 2, **characterized in that** the plane of separation (P1) is roughly perpendicular to the leading edge (11) of the front lip (4).

4. Air intake according to one of Claims 1 to 3, **characterized in that** the cutting line (9a) of the cap (9) is curved and contained in a geometric plane containing the straight edge (12) of the crescent (8).

5. Air intake according to any one of Claims 1 to 3, **characterized in that** the cap (9) has a rectangular or trapezoidal outline.

6. Air intake according to any one of Claims 1 to 5, **characterized in that** the cap (9) forms a hatch for access to the inside.

7. Air intake according to Claim 6, **characterized in that** the de-icing system comprises a pipe (7) conveying fluid passing through the rear partition (2) at the plane of separation (P1).

8. Air intake according to any one of Claims 1 to 7, **characterized in that** the plane of separation (P1) is arranged in the lower region of said air intake.

9. Air intake according to any one of Claims 1 to 7, **characterized in that** it comprises two diametrically opposed lateral planes of separation (P1, P'1).

10. Air intake according to any one of Claims 1 to 9, **characterized in that** the crescent (8) is fixed rigidly to the main part by means of flanges.

11. Air intake according to any one of Claims 1 to 10, **characterized in that** the cap (9) is mounted on the main part using hinges (19).
